# EUROPÄISCHE PATENTSCHRIFT

(11) **EP 1 232 799 B1**
(45) Veröffentlichungstag und Bekanntmachung des Hinweises auf die Patenterteilung: **23.08.2006**
(21) Anmeldenummer: 02002709.0
(22) Anmeldetag: 06.02.2002
(51) Int. Cl.: B05B 13/02

(54) **Sprühvorrichtung mit mindestens einer Trennstelle**
Spraying device with at least one separating area
Appareil de pulvérisation avec au moins une zone de séparation

(30) Priorität: 20.02.2001 DE 10108010
(43) Veröffentlichungstag der Anmeldung: 21.08.2002
(73) Patentinhaber: Dürr Systems GmbH, 70435 Stuttgart (DE)
(72) Erfinder: Ballandies, Regine, 71732 Tamm (DE); Poppe, Siegfried, 71706 Unterriexingen (DE)
(74) Vertreter: Heusler, Wolfgang

(56) Entgegenhaltungen:
- EP-A- 0 850 693
- DE-A- 10 103 067
- US-A- 4 223 313

## Beschreibung

Die Erfindung betrifft eine Sprühvorrichtung für die Serienbeschichtung von Werkstücken mit mindestens einer Trennstelle gemäß dem Oberbegriff des Anspruchs 1.

Sprühvorrichtungen dieser Art wie z.B. die für die Serienbeschichtung von Fahrzeugkarossen verwendeten Lackierroboter oder sonstigen programmgesteuerten Beschichtungsmaschinen können lösbare Teile enthalten, die zur Wartung, Reparatur oder Erneuerung oder zum Austausch einfach und schnell von einem anderen Teil der Maschine abnehmbar sein sollen. U.a. kann es zweckmäßig sein, den gesamten Zerstäuber einer solchen Sprühvorrichtung auszuwechseln (DE 100 22 854, DE 101 03 067) und/oder den Spritzkopf des Zerstäubers von dessen Ventilblock abnehmbar zu befestigen. Durch die jeweiligen Trennstellen können nicht nur die notwendigen Leitungen für die Material- und Druckluftversorgung des Zerstäubers und ggf. pneumatische Steuerleitungen führen, sondern auch elektrische Leiter etwa für die Leistungsversorgung der üblichen Magnetventile und/oder für elektrische Steuer- oder Sensorsignale. Typische Beispiele hierfür sind die im Ventilblock bekannter Zerstäuber enthaltenen Magnetventile zur pneumatischen Betätigung des Hauptnadelventils zum Öffnen und Schließen der Sprühdüse und im Spritzkopf mancher Zerstäuber befindliche elektrische Sensoren zur Rückmeldung der Hauptnadelstellung. Damit die betreffenden Teile der Sprühvorrichtung leicht voneinander getrennt und miteinander verbunden werden können, bestand bisher die Möglichkeit, die auf den entgegengesetzten Seiten der Trennstellen befindlichen Leiter durch kleine elektrische Stecker miteinander zu verbinden.

Die oben erwähnte lösbare Befestigung des Spritzkopfes eines Zerstäubers an dessen Ventilblock ist beispielsweise aus der EP-A 0 850 693 bekannt. Der Zweck der Trennstelle ist hier die Möglichkeit, je nach Betriebsbedingungen auswählbare unterschiedliche Spritzköpfe an dem ihnen gemeinsamen Ventilblock zu montieren. An der Trennstelle ist eine elektrische Steckverbindung für das Hochspannungskabel des in dem Spritzkopf befindlichen Hochspannungserzeugers vorgesehen.

Aus der US 4 223 313 ist ein Roboter bekannt, zwischen dessen Achsen, also den relativ zueinander um mehr als 360° drehbaren Gliedern elektrische Leistung und elektrische Signale zur Vermeidung flexibler Leitungen induktiv über Wicklungen übertragen werden, die einander an der Roboterachse berührungslos gegenüberliegen und in Ferritkerne eingeschlossen sind. Dies sind keine Trennstellen für schnell und einfach voneinander lösbare und miteinander verbindbare Teile, für die elektrische Steckverbindungen verwendet werden könnten.

Bei der elektrischen Steckverbindungstechnik besteht aber das Problem, daß die für den vorliegenden Anwendungsfall notwendigerweise möglichst kleinen Stecker selbst bei erheblichem Abdichtungsaufwand und erhöhter Goldauflage der Steckkontakte insbesondere in der Sprühkabine durch Korrosion und Lackverschmutzung beeinträchtigt werden. Das Problem wird dadurch erschwert, daß die zur Verfügung stehende elektrische Leistung und Spannung aus Explosionsschutzgründen begrenzt sind. Außerdem werden in Beschichtungsanlagen in der Regel extrem kurze Schaltzeiten verlangt und keine Verzögerungen der Strom- und Signalübertragung zugelassen. Elektrische Übertragungsprobleme in den Leistungs- und/oder Signalleitungen führen aber zu Fehlfunktionen der Zerstäuber und damit zu kostspieligem Ausschuß der zu beschichtenden Werkstücke, besonders im Fall fehlerhaft lackierter Fahrzeugkarossen.

Schwierigkeiten bereitete es bisher auch, die Zerstäuber und sonstigen in der Sprühkabine befindlichen Komponenten einer Beschichtungsanlage hinsichtlich der elektrischen Funktionen zu überprüfen. Beim Anschluß mit Steckern versehener eventueller Prüfgeräte an den Trennstellen der hier betrachteten zerlegbaren Sprühvorrichtungen würden ähnliche Kontaktprobleme auftreten wie zwischen den Teilen der Sprühvorrichtungen im Beschichtungsbetrieb.

Der Erfindung liegt die Aufgabe zugrunde, eine Sprühvorrichtung anzugeben, in der aus Sicherheitsgründen begrenzte elektrische Leistung und/oder Steuer- oder Informationssignale mit einfachen Mitteln und minimalem Platzbedarf über gegebenenfalls mehrere Trennstellen zuverlässig und ohne Beeinträchtigung durch die beim Beschichtungsbetrieb herrschenden Umgebungsbedingungen übertragen werden können. Ferner soll die Sprühvorrichtung eine vereinfachte Prüfung elektrischer Funktionen ermöglichen.

Diese Aufgabe wird durch die in den Patentansprüchen gekennzeichnete Sprühvorrichtung gelöst.

Die kontaktlose induktive Übertragungstechnik erweist sich in Beschichtungsanlagen nicht nur aufgrund ihrer Robustheit und Zuverlässigkeit, sondern auch aufgrund ihrer elektrischen und bautechnischen Eigenschaften als ideal sowohl zur Übertragung elektrischer Energie etwa für Magnetventile als auch zur Übertragung von Steuer- oder Informationssignalen, und zwar bei Bedarf über mehrere Trennstellen hinweg.

Wichtig kann hierbei auch die Möglichkeit der Übertragung der Energie und der Signale in zueinander entgegengesetzten Richtungen sein, beispielsweise zur Stromversorgung eines Sensors oder ggf. auch einer Prüfvorrichtung in der einen Richtung und zur Übertragung der gewonnenen Signale in der anderen Richtung.

Alle elektrischen Koppelstellen sind gekapselt, vor Schmutz und Korrosion geschützt und insbesondere vollkommen unempfindlich gegen die in Beschichtungsanlagen unvermeidbaren Verunreinigungen durch Lack und Lösemittel. Damit ergibt sich eine deutliche Verbesserung der Produktionssicherheit im Beschichtungsbetrieb, und auch der Wartungsaufwand wird herabgesetzt.

Ein wichtiger Vorteil ist vor allem auch die Möglichkeit, die induktiven Koppler an den Trennstellen vollständig in die betreffenden Teile der zerlegbaren Sprühvorrichtung zu integrieren, insbesondere in die glatten ebenen Stirnflächen, mit denen diese Teile in der Regel aneinanderstoßen, so daß die elektrischen Koppler weder die mechanischen Verbindungen stören noch den Verbindungsaufwand erhöhen. Mit elektrischen Einrichtungen versehene Teile wie Zerstäuber, Ventileinheiten, Anschlußblöcke usw. können schnell und einfach ausgewechselt werden. Da alle Teile elektrisch kompatibel sind, ist auch ein Nachrüsten oder Umrüsten vorhandener Anlagen mit anderen Teilen problemlos möglich.

Im übrigen erfüllen induktive Koppler im Gegensatz zu Steckverbindungen naturgemäß und ohne Zusatzmaßnahmen alle in Beschichtungsanlagen zu beachtenden Explosionsschutzbedingungen.

Gemäß einem besonderen Aspekt ermöglicht die Erfindung darüber hinaus auf besonders einfache und zuverlässige Weise die Überprüfung elektrischer Funktionen in zerlegbaren Sprühvorrichtungen. An den Trennstellen kann nämlich einfach ein für die gewünschte Prüfung ausgebildeter Stift mit mindestens einer der induktiven Koppeleinrichtung der Sprühvorrichtung entsprechenden Koppelspule an die Koppelstelle eines der voneinander gelösten Teile angesetzt werden (oder eventuell auch zwischen die Koppelstellen benachbarter Teile gehalten werden). Wenn auf diese Weise beispielsweise die einwandfreie Spannungsversorgung eines Magnetventils oder die ordnungsgemäße Funktion von Sensoren der Sprühvorrichtung überprüft werden soll, benötigt der Prüfstift für eine eingebaute Auswerte- und Signalschaltung keine eigene Spannungsquelle, da er über seine Koppelspule von der Sprühvorrichtung gespeist wird. Die durch dieses Prüfverfahren ermöglichte Fehlerdiagnose ist wesentlich einfacher, schneller und zuverlässiger durchführbar und entsprechend weniger kostenaufwendig als es bisher möglich war.

Die Erfindung eignet sich für beliebige zerlegbare Bestandteile von Beschichtungsanlagen, bei denen schnell lösbare elektrische Verbindungen benötigt werden. Im folgenden wird sie am Beispiel eines Luftzerstäubers einer Kraftfahrzeugbeschichtungsanlage näher erläutert. In der Zeichnung zeigen:
- Fig. 1: eine schematische Ansicht des Zerstäubers und seiner elektrischen Schaltungsanordnung;
- Fig. 2: die elektrische und bauliche Anordnung der induktiven Koppeleinrichtungen des Zerstäubers nach Fig. 1;
- Fig. 3: eine schematische Ansicht eines Prüfstiftes zum Prüfen der Funktionen eines Magnetventils und der Nadelstellungsabfrage des Zerstäubers nach Fig. 1; und
- Fig. 4: ein Blockschaltbild des Prüfstiftes nach Fig. 3.

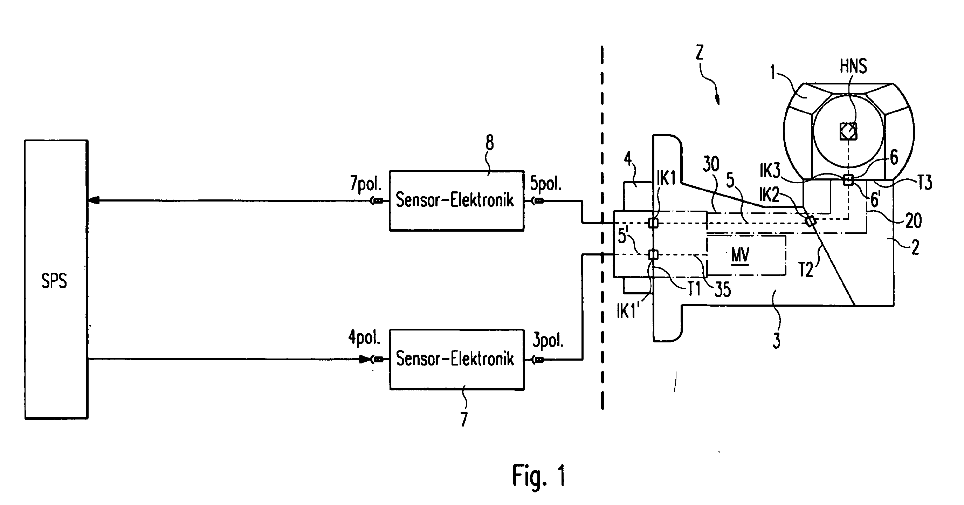

Der in Fig. 1 dargestellte Zerstäuber Z ist an sich bekannt und besteht im wesentlichen aus dem schnell auswechselbaren Spritzkopf 1, der an einem Halteteil 2 montiert, z.B. angeschraubt ist, das seinerseits lösbar an einem Ventilblock 3 befestigt ist, welcher auf der dem Halteteil abgewandten Seite ebenfalls lösbar an einem weiteren Halteteil 4 montiert ist. Zwischen den genannten Teilen bestehen also die drei dargestellten Trennebenen oder Trennstellen T1, T2 und T3.

Die Halterungen sind anwendungsspezifisch ausgebildet, bei dem dargestellten Beispiel für Seiten- oder Dachmaschinen. Bei typischen Luftzerstäubern für Lackierroboter kann der Spritzkopf dagegen unmittelbar am Ventilblock angebracht sein, so daß nur zwei Trennebenen vorhanden sind. Andererseits könnten auch mehr als drei elektrisch gegebenenfalls der Reihe nach zu überbrückende Trennstellen vorhanden sein. Beispielsweise könnte sich im Fall von Robotern auch eine Trennstelle zwischen dem Roboterarm und dem mit dem Zerstäuber auswechselbaren Handgelenk befinden (DE 101 03 067).

Der Zerstäuber Z arbeitet insgesamt bewegbar in der üblichen geschlossenen Spritzkabine, deren Wand durch die Strichlinie K angedeutet ist.

Die Hauptnadel des Spritzkopfes 1 zum Öffnen und Schließen der Spritzdüse wird durch ein elektrisches Magnetventil MV angesteuert, das sich in dem Ventilblock 3 befindet und von einer außerhalb der Kabinenwand K befindlichen elektronischen Schaltung 7 mit elektrischer Leistung versorgt wird, die ihrerseits von einer übergeordneten Einheit SPS gesteuert wird. Die durch den Zerstäuber verlaufenden Leiter zur Versorgung des Magnetventils MV sind bei 5' angedeutet.

Zerstäuber der betrachteten Art können im Spritzkopf 1 bekanntlich einen Sensor HNS zur Abfrage der Stellung der Hauptnadel enthalten, der aus zwei Hall-Elementen zur Erzeugung von vier binären Signalen gebildet sein kann und über durch den Zerstäuber Z führende Leiter 5 und eine außerhalb der Kabinenwand K befindliche elektronische Sensorschaltung 8 ebenfalls mit der übergeordneten Steuereinheit SPS verbunden ist.

Die an den drei dargestellten Trennstellen T1, T2 und T3 erforderlichen lösbaren Verbindungen der jeweiligen elektrischen Leiter für die Hauptnadelabfrage sind erfindungsgemäß durch kontaktlose induktive Koppler IK1, IK2 bzw. IK3 realisiert. Ebenso ist die an der Trennstelle T1 zwischen dem Halteteil 4 und dem Ventilblock 3 benötigte lösbare Verbindung für die Leistungsversorgung des Magnetventils MV durch einen weiteren induktiven Koppler IK1' realisiert. Die induktiven Koppler bestehen jeweils aus zwei vorzugsweise flachen Spulen, die einander an den Trennstellen gegenüberliegen, wenn die betreffenden Teile zusammengefügt sind. Insbesondere sind Topfkernspulen zweckmäßig, die zwei galvanisch getrennte Wicklungen haben können. Die im Ventilblock 3 befindlichen Spulen der Koppler IK1 und IK2 sind durch die Leiter 5 miteinander verbunden.

Die bevorzugten Topfkern- oder Flachspulen können vorteilhaft so klein sein, daß praktisch keine baulichen Veränderungen von statt dessen durch Stecker verbindbaren trennbaren Teilen von Sprühvorrichtungen erforderlich sind. Bei dem betrachteten Beispiel genügen Flachspulen mit einem Durchmesser von weniger als 10 mm und einer noch geringeren Dicke (z.B. 6 mm bzw. 5 mm). Gemäß einer besonders zweckmäßigen Ausgestaltung der Erfindung können die Spulen der Koppler jeweils in eigenen Kunststoffkapseln vergossen sein, die ihrerseits in die ebenen Stirnflächen eingesetzt oder integriert sind, mit denen die trennbaren Teile des Zerstäubers an den Trennstellen aneinander anliegen, wobei die Flachspulen mit ihren Hauptebenen parallel zu den Stirnflächen und nahe an den Trennebenen liegen. In Fig. 1 sind als Beispiel die beiden je eine Flachspule enthaltenden Kapseln des Kopplers IK3 mit 6 und 6' bezeichnet. Aufgrund ihrer Positionierung in den Stirnflächen werden die beiden Spulen eines Kopplers beim Zusammenfügen der betreffenden Teile des Zerstäubers oder der Beschichtungsmaschine beispielsweise mit Hilfe von Schrauben von selbst in die für die induktive Signal- oder Leistungsübertragung erforderliche gegenseitige Lage gebracht. In anderen Fällen kann es aber auch zweckmäßig sein, die beiden Spulen eines induktiven Kopplers in zusammensteckbaren Kapselelementen anzuordnen, so daß sie durch das Zusammenstecken der Kapsel in die erforderliche gegenseitige Lage gebracht werden.

An sich kann ein induktiver Koppler über dieselben Übertragerspulen elektrische Leistung in Form einer Versorgungsspannung und zugleich dieser Spannung aufmodulierte Signale übertragen. Wenn der induktive Koppler aber mehr als die beiden an die Enden je einer Übertragerspule angeschlossenen Leiter miteinander verbinden soll, kann die betreffende Kapsel auch zwei oder mehr beispielsweise in derselben Ebene nebeneinander oder auch übereinander angeordnete Flachspulen oder Wicklungen enthalten. Jeweils mindestens zwei Spulen oder Wicklungen befinden sich bei dem betrachteten Beispiel in den Kapseln der Koppler IK1, IK2 und IK3 für die Spannungsversorgung und Abfrage der Hall-Sensoren HNS.

Bei dem hier beschriebenen Ausführungsbeispiel enthält mindestens eine der Spulenkapseln, beispielsweise die im Spritzkopf befindliche Kapsel 6 mit den an den Sensor HNS angeschlossenen Spulen, auch einen vorzugsweise mit der oder den Spulen vergossenen, auf einer kleinen Platine angeordneten Mikroprozessor oder eine sonstige Elektronik. Eine solche Elektronik kann sich auch in einer oder beiden Kapseln weiterer Koppler befinden, insbesondere an der Trennstelle T1.

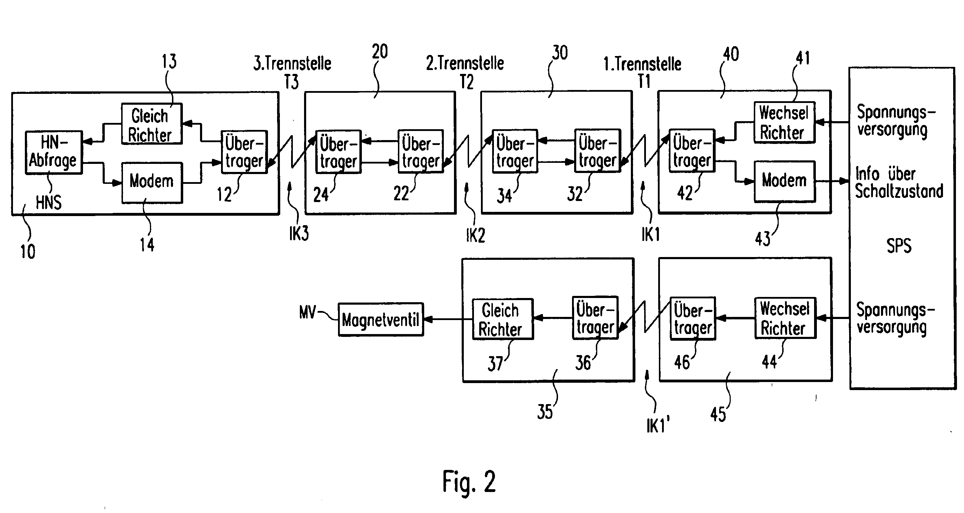

Die Spulen oder Kapseln können Bestandteil modularer Bauelemente sein, die in die trennbaren Teile (1, 2, 3, 4) des Zerstäubers eingebaut sind. Beispielsweise sind die in den Ventilblock 3 und das Halteteil 2 eingebauten Module mit den entsprechenden Spulen der Koppler IK1, IK1', IK2 und IK3 mit 30, 35 bzw. 20 bezeichnet (entsprechend Fig. 2).

Neben den Spulenkapseln der induktiven Koppler befinden sich in den an den Trennstellen aneinander anliegenden Stirnflächen der Zerstäuber- bzw. Maschinenteile die in der üblichen Weise abgedichteten Verbindungsöffnungen der durch die Sprühvorrichtung führenden sonstigen üblichen Leitungen für Druckluft, Beschichtungsmaterial und Lösemittel. Die Verbindung dieser Leitungen wird aufgrund der beschriebenen Anordnung der induktiven Koppler durch diese nicht beeinträchtigt oder erschwert.

Fig. 2 erläutert die elektrische Schaltungsanordnung der in Fig. 1 dargestellten induktiven Koppler und ihre Anordnung in den erwähnten Modulen. Der erste Modul 10, der durch die Kapsel 6 (Fig. 1) gebildet sein kann, befindet sich im Spritzkopf 1 und ist an der Trennstelle T3 durch den Koppler IK3 mit dem zweiten Modul 20 gekoppelt, der sich in dem Halteteil 2 befindet. Ein dritter Modul 30 befindet sich im Ventilblock 3 und ist einerseits über den Koppler IK2 mit dem Modul 20 und andererseits über den Koppler IK1 mit einem weiteren Modul 40 im Halteteil 4 gekoppelt. Der Ventilblock 3 und das Halteteil 4 enthalten jeweils einen weiteren Modul 35 bzw. 45.

Die drei für die Hauptnadelabfrage benötigten Koppler IK1, IK2 und IK3 sind darstellungsgemäß elektrisch in Reihe geschaltet und sollen einerseits dem Hall-Sensor HNS die von ihm benötigte Versorgungsspannung zuführen und andererseits dessen dem Schaltzustand der Hauptnadel entsprechende Abfragesignale zurück in die Steuereinheit SPS übertragen. Aus der von der Steuereinheit SPS kommenden Versorgungsgleichspannung wird von einem Wechselrichter 41 im Modul 40 eine Wechselspannung erzeugt, die der im Halteteil 4 befindlichen Übertragerspulenanordnung 42 des Kopplers IK1 zugeführt und von diesem in seine im Ventilblock 3 im im Modul 30 befindliche Übertragerspulenanordnung 32 übertragen wird. Die Spulenanordnung 32 ist mit der in der entgegengesetzten Stirnfläche des Ventilblocks 3 an der Trennstelle T2 befindlichen Übertragerspulenanordnung 34 des Kopplers IK2 verbunden, von der die Versorgungsspannung in die gegenüberliegende Übertragerspulenanordnung 22 dieses Kopplers in dem im Halteteil 2 befindlichen Modul 20 und von dort über die Übertragerspulenanordnungen 24 und 12 des Kopplers IK3 in den Modul 10 im Spritzkopf 1 übertragen wird. Im Modul 10 wird die Versorgungswechselspannung von dem Gleichrichter 13 in eine Gleichspannung für den Sensor HNS umgewandelt. Das über den Schaltzustand der Hauptnadel informierende Ausgangssignal wird von einem Modem 14 in eine weitere Wechselspannung umgewandelt und über die schon beschriebene Übertragerstrecke zurück in den Modul 40 zurückgesendet, wo diese Information von einem weiteren Modem 43 gelesen und in ein Schaltsignal für die Steuereinheit SPS umgeformt wird. Die erwähnten Gleichrichter und Modems können durch die mit den Spulen eingekapselten Mikroprozessoren oder sonstigen Elektronikkreise realisiert sein.

Auf einem von der beschriebenen Reihenschaltung für die Hauptnadelabfrage getrennten Weg wird das Magnetventil MV im Ventilblock 3 des Zerstäubers mit der benötigten Leistung versorgt. Die hierfür von der Steuereinheit SPS erzeugte Gleichspannung wird von einem Wechselrichter 44 im Modul 45 in Wechselspannung umgewandelt und von den Übertragerspulenanordnungen 46 und 36 des Kopplers IK1' an der Trennstelle T1 in den im Ventilblock 3 befindlichen Modul 35 übertragen, in dem sie über einen Gleichrichter 37 zu dem Magnetventil MV gelangt, um dieses zu betätigen.

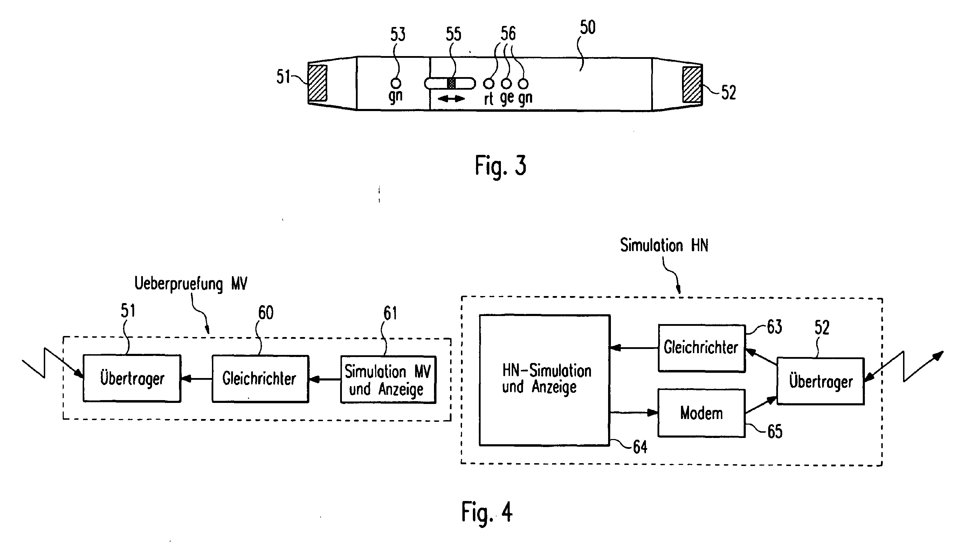

In Fig. 3 ist ein Prüfstift 50 zur Überprüfung der Versorgungsspannung des Magnetventils MV und der Sensorikfunktionen des Sensors HNS (Fig. 1) dargestellt. Dieser Prüfstift enthält in seinen beiden Enden jeweils induktive Übertragerspulenanordnungen 51 bzw. 52, die den Spulenanordnungen der induktiven Koppler der beschriebenen Sprühvorrichtung entsprechen und an eine interne Auswerte-, Simulations- und Signalschaltung des Prüfstiftes angeschlossen sind. Der zu der Spulenanordnung 51 gehörende Teil der internen Schaltung dient zur Überprüfung der Magnetventilversorgung, der zu der Spulenanordnung 52 gehörende Teil dagegen zur Überprüfung der Hall-Sensorik.

Setzt man bei abmontiertem Ventilblock 3 (Fig. 1) das die Spulenanordnung 51 enthaltende Ende des Prüfstiftes 50 auf die im Halteteil 4 integrierte Kapsel mit der Spulenanordnung 46 (Fig. 2) des Kopplers IK1' auf, so leuchtet die grüne Leuchtdiode 53 dann und nur dann auf, wenn eine zur Versorgung des Magnetventils MV ausreichende Spannung übertragen wird. Somit wird eine ordnungsgemäße Ansteuerung des Magnetventils simuliert.

Unterschiedliche, mit Hilfe eines Schiebeschalters 55 mit drei Stellungen wählbare Kontrollen ermöglicht der an die andere Übertragerspulenanordnung 52 angeschlossene Teil der internen Schaltung des Prüfstiftes, zu der drei verschiedenfarbige Leuchtdioden 56 gehören. Setzt man das diese Spulenanordnung enthaltende Ende des Prüfstiftes beispielsweise auf die im Halteteil 4 integrierte Kapsel mit der Übertragerspulenanordnung 42 des Kopplers IK1 auf, so leuchtet bei der ersten (z.B. mittleren) der drei wählbaren Schalterstellungen dann und nur dann die gelbe Leuchtdiode 56 auf, wenn die über die Spulenanordnung 52 übertragene Spannung die für die Spannungsversorgung des Sensors HNS ausreichende Größe hat. Bei der zweiten (z.B. rechten) Schalterstellung, die durch Aufleuchten der grünen Leuchtdiode 56 angezeigt wird, erzeugt dagegen die Schaltung des Prüfstifts 50 Signale oder eine Spannung, die dem im Betrieb normalerweise vom Sensor HNS bei geöffneter Hauptnadelposition gelieferten Signal entsprechen, während bei der dritten, durch die rote Leuchtdiode 56 angezeigten Schalterstellung eine dem normalen Signal für geschlossene Hauptnadelposition entsprechende Spannung oder Signale erzeugt werden. Diese die Hauptnadelsensorik simulierenden Spannungen oder Signale können in die Steuereinheit SPS übertragen und dort zur Kontrolle visuell (z.B. am Bildschirm) überprüft werden.

Die beiden Teile der internen Schaltung des Prüfstiftes 50 sind in Fig. 4 als Blockschaltbild dargestellt. In dem zur Prüfung der Magnetventilspannung dienenden Teil wird die an der Trennstelle T1 von der entsprechenden Spule des Kopplers IK1' über die Übertragerspulenanordnung 51 eingekoppelte Wechselspannung über einen Gleichrichter 60 der Simulations- und Anzeigeschaltung 61 zugeführt und dort zur Ansteuerung der Leuchtdiode 53 ausgewertet.

In dem anderen Teil wird die beispielsweise ebenfalls an der Trennstelle T1 über die entsprechende Spule des Kopplers IK1 und die Übertragerspulenanordnung 52 eingekoppelte Sensorversorgungsspannung über einen Gleichrichter 63 der Simulations- und Anzeigeschaltung 64 zugeführt, in der zunächst zur Kontrolle dieser Spannung die gelbe Leuchtdiode 56 angesteuert wird. Die die Hauptnadelstellung simulierenden Signale werden dagegen von dem Modem 65 in Wechselspannungssignale umgewandelt, die über die Übertragerspulenanordnung 52 in die Einheit SPS zurückgeleitet werden. In ihren beiden Teilen kommt die interne Schaltung des Prüfstiftes 50 ohne eigene Spannungsquelle aus, da sie über die jeweilige Übertragerspulenanordnung 51 bzw. 52 versorgt werden.

## Patentansprüche

1. Sprühvorrichtung für die Serienbeschichtung von Werkstücken mit mindestens einer Trennstelle (T1,T2,T3), an der ein Teil (1,2,3) der Sprühvorrichtung lösbar und abnehmbar an einem anderen Teil (1,2,3,4) befestigt oder befestigbar ist,
mit einer in dem abnehmbaren Teil befindlichen elektrischen Steuer- oder Signaleinrichtung (MV,HNS),
mit einer durch die Teile der Sprühvorrichtung führenden elektrischen Leiteranordnung (5,5') zum Übertragen elektrischer Leistung und/oder Signale zu oder von der Steuer- oder Signaleinrichtung (MV,HNS) des abnehmbaren Teils (1,2,3),
und mit einer elektrischen Koppeleinrichtung (IK) zur lösbaren elektrischen Verbindung der Teile der Leiteranordnung (5,5') an der Trennstelle (T1,T2,T3),
**dadurch gekennzeichnet, daß** die elektrische Koppeleinrichtung (IK) durch induktive Übertragerspulen gebildet ist, die eingekapselt in oder an den Teilen (1,2,3,4) der Sprühvorrichtung angeordnet sind und einander an der Trennstelle (T1,T2, T3) berührungslos gegenüberliegen, wenn das abnehmbare Teil (1,2,3) der Sprühvorrichtung an dem anderen Teil befestigt ist.

2. Sprühvorrichtung nach Anspruch 1, **dadurch gekennzeichnet, daß** die Übertragerspulen (12,22,24 usw.) in ebene Stirnflächen der Teile (1,2,3,4) der Sprühvorrichtung eingesetzt sind, an denen diese an der Trennstelle (T1,T2,T3) zusammenstoßen.

3. Sprühvorrichtung nach Anspruch 1 oder 2, **dadurch gekennzeichnet, daß** die Übertragerspulen (12,22,24 usw.) in geschlossene Kapseln (6,6') eingebettet sind, die ihrerseits in die Teile (1,2,3,4) der Sprühvorrichtung eingesetzt sind.

4. Sprühvorrichtung nach einem der vorangehenden Ansprüche, **dadurch gekennzeichnet, daß** in mindestens eines der Teile (2) der Sprühvorrichtung ein sich zwischen zwei Trennstellen (T2,T3) erstreckendes modulares Bauteil eingesetzt ist, das zwei über elektrische Leiter miteinander verbundene Übertragerspulenanordnungen (22,24) enthält, von denen sich die eine an der einen Trennstelle (T2) und die andere an der anderen Trennstelle (T3) befindet.

5. Sprühvorrichtung nach einem der vorangehenden Ansprüche, **dadurch gekennzeichnet, daß** mindestens ein induktiver Koppler (IK) vorgesehen ist, der auf jeder seiner beiden trennbaren Seiten zwei oder mehr Übertragerspulen aufweist, die nebeneinander in einer gemeinsamen Kapsel oder einem in das Teil (1,2,3,4) der Sprühvorrichtung eingesetzten modularen Bauteil (10,20,30,40) eingeschlossen sind.

6. Sprühvorrichtung nach einem der vorangehenden Ansprüche, **dadurch gekennzeichnet, daß** mindestens eine Übertragerspule mindestens eines induktiven Kopplers (IK) zusammen mit einem Mikroprozessor oder einer sonstigen Elektronikanordnung in einer gemeinsamen Kapsel oder einem in das Teil (1,2,3,4) der Sprühvorrichtung eingesetzten modularen Bauteil (10,35,40,45) eingeschlossen ist.

7. Sprühvorrichtung nach Anspruch 2, **dadurch gekennzeichnet, daß** die Übertragerspulen (12,22,24 usw.) Flachspulen sind, die mit ihren Hauptebenen parallel zu den Stirnflächen der Teile der Sprühvorrichtung liegen.

8. Sprühvorrichtung nach einem der vorangehenden Ansprüche, **dadurch gekennzeichnet, daß** die Übertragerspulen mindestens eines induktiven Kopplers (IK) Flachspulen mit einem Durchmesser von weniger als 10 mm sind.

9. Sprühvorrichtung nach einem der vorangehenden Ansprüche, **dadurch gekennzeichnet, daß** sich mindestens eine mit einer induktiven Koppeleinrichtung (IK3,IK2) versehene Trennstelle (T3,T2) zwischen dem Spritzkopf (1) eines Zerstäubers (Z) und einem Ventilblock (3) des Zerstäubers befindet.

10. Sprühvorrichtung nach einem der vorangehenden Ansprüche, **dadurch gekennzeichnet, daß** sich mindestens eine mit einer induktiven Koppeleinrichtung (IK1) versehene Trennstelle (T1) zwischen einem Ventilblock (3) eines Zerstäubers (Z) und einem Halteteil (4) des Zerstäubers auf der dem Spritzkopf (1) abgewandten Seite des Ventilblocks (3) befindet.

11. Sprühvorrichtung nach einem der vorangehenden Ansprüche, **dadurch gekennzeichnet, daß** zwei, drei oder mehr Trennstellen (T1,T2,T3) vorgesehen sind, an denen sich induktive Koppeleinrichtungen (IK1, IK2, IK3) zwischen benachbarten Teilen der Sprühvorrichtung befinden, wobei die Koppeleinrichtungen dieser Trennstellen elektrisch in Reihe geschaltet sind, so daß elektrische Leistung oder Signale der Reihe nach über mehrere induktive Koppler übertragen werden.

12. Sprühvorrichtung nach einem der vorangehenden Ansprüche mit einer zum Prüfen elektrischer Funktionen der Steuer- oder Signaleinrichtung (MV,HNS) der Sprühvorrichtung ausgebildeten beispielsweise stiftförmigen Prüfvorrichtung (50), die in oder an einer Stirnfläche eine Übertragerspulenanordnung (51,52) enthält, welche mit der Übertragerspulenanordnung (42,46) eines der voneinander getrennten Teile (4) der Sprühvorrichtung eine induktive Koppeleinrichtung bildet.

13. Sprühvorrichtung nach Anspruch 12 mit einer Prüfvorrichtung (50), deren Stirnfläche auf eine Stirnfläche des Teils (4) der Sprühvorrichtung aufsetzbar ist, an der oder in der sich deren Übertragerspulenanordnung (42,46) befindet.

14. Sprühvorrichtung nach Anspruch 12 oder 13 mit einem Prüfstift (50), der an entgegengesetzten Enden je eine induktive Übertragerspulenanordnung (51,52) enthält.

15. Sprühvorrichtung nach einem der Ansprüche 12 bis 14 mit einer Prüfvorrichtung (50), die eine Auswerteschaltung (61,64) und Signallampen (53,56) zum Anzeigen der geprüften Funktionen enthält.

16. Sprühvorrichtung nach einem der vorangehenden Ansprüche, **dadurch gekennzeichnet, dass** die Koppeleinrichtung (IK) Energie zur Stromversorgung einer Signal- oder Prüfeinrichtung (HNS, 50) in der einen Übertragungsrichtung und von der Signal- oder Prüfeinrichtung erzeugte Signale in der entgegengesetzten Richtung überträgt.

## Claims

1. Spraying device for the serial coating of workpieces with at least one separation point (T1, T2, T3) on which a part (1, 2, 3) of the spraying device is or can be fixed releasably and removably on another part (1, 2, 3, 4), with an electric control or signalling means (MV, HNS) located in the removable part, with an electrical conductor arrangement (5, 5') leading through the parts of the spraying device for transmitting electric power and/or signals to or from the control or signalling means (MV, HNS) of the removable part (1, 2, 3), and with an electric coupling means (IK) for releasable electrical connection of the parts of the conductor arrangement (5, 5') at the separation point (T1, T2, T3), **characterised in that** the electric coupling means (IK) is formed by inductive repeating coils which are disposed encapsulated in or on the parts (1, 2, 3, 4) of the spraying device and lie opposite one another without contact at the separation point (T1, T2, T3) when the removable part (1, 2, 3) of the spraying device is fixed on the other part.

2. Spraying device as claimed in Claim 1, **characterised in that** the repeating coils (12, 22, 24 etc.) are inserted into planar end faces of the parts (1, 2, 3, 4) of the spraying device on which they meet at the separation point (T1, T2, T3).

3. Spraying device as claimed in Claim 1 or 2, **characterised in that** the repeating coils (12, 22, 24 etc.) are embedded in closed capsules (6, 6') which in turn are inserted into the parts (1, 2, 3, 4) of the spraying device.

4. Spraying device as claimed in any one of the preceding claims, **characterised in that** a modular component extending between two separation points (T2, T3) is inserted into at least one of the parts (2) of the spraying device and contains two repeating coil arrangements (22, 24) which are connected to one another and of which one is located at one separation point (T2) and the other at the other separation point (T3).

5. Spraying device as claimed in any one of the preceding claims, **characterised in that** at least one inductive coupler is provided which has on each of its two separable sides two or more repeating coils which are enclosed adjacent to one another in a common capsule or in a modular component (10, 20, 30, 40) inserted into the part (1, 2, 3, 4) of the spraying device.

6. Spraying device as claimed in any one of the preceding claims, **characterised in that** at least one repeating coil of at least one inductive coupler (IK) is enclosed together with a microprocessor or some other electronic arrangement in a common capsule or in a modular component (10, 35, 40, 45) inserted into the part (1, 2, 3, 4) of the spraying device.

7. Spraying device as claimed in Claim 2, **characterised in that** the repeating coils (12, 22, 24 etc.) are flat coils which lie with their principal planes parallel to the end faces of the parts of the spraying device.

8. Spraying device as claimed in any one of the preceding claims, **characterised in that** the repeating coils of at least one inductive coupler (IK) are flat coils with a diameter of less than 10 mm.

9. Spraying device as claimed in any one of the preceding claims, **characterised in that** at least one separation point (T3, T2) provided with an inductive coupling means (IK3, IK2) is located between the spray head (1) of an atomiser (Z) and a valve block (3) of the atomiser.

10. Spraying device as claimed in any one of the preceding claims, **characterised in that** at least one separation point (T1) provided with an inductive coupling means (IK1) is located between a valve block (3) of an atomiser (Z) and a retaining part (4) of the atomiser on the side of the vale block (3) facing away from the spray head (1).

11. Spraying device as claimed in any one of the preceding claims, **characterised in that** two, three or more separation points (T1, T2, T3) are provided at which inductive coupling means (IK1, IK2, IK3) are located between adjacent parts of the spraying device, the coupling means of these separation points be electrically connected in,series so that electrical power or signals are transmitted sequentially via a plurality of inductive couplers.

12. Spraying device as claimed in any one of the preceding claims with a testing device (50) constructed for example in the form of a pin for testing electrical functions of the control or signalling means (MV, HNS) of the spraying device, the said device containing in or on an end face a repeating coil arrangement (51, 52) which forms an inductive coupling means with the repeating coil arrangement (42, 46) of one of the parts of the spraying device which are separated from one another.

13. Spraying device as claimed in Claim 12 with a testing device (50), the end face of which can be placed onto an end face of the part (4) of the spraying device on which or in which the repeating coil arrangement (42, 46) is located.

14. Spraying device as claimed in Claim 12 or 13 with a testing pin (5) which contains an inductive repeating coil arrangement (51, 52) on each of its opposing ends.

15. Spraying device as claimed in any one of Claims 12 to 14 with a testing device (50) which contains an evaluation circuit (61, 64) and indicator lights (53, 56) for indicating the tested functions.

16. Spraying device as claimed in any one of the preceding claims, **characterised in that** the coupling means (IK) transmits power for the current supply to a signalling or testing means (HNS, 50) in one direction of transmission and transmits signals generated by the signalling or testing means in the opposite direction.

## Revendications

1. Dispositif de pulvérisation pour le revêtement en série de pièces avec au moins un emplacement de séparation (T1, T2, T3) auquel une partie (1, 2, 3) du dispositif de pulvérisation est fixée ou peut être fixée, de manière séparable et amovible, sur une autre partie (1, 2, 3, 4), avec un dispositif de commande ou de signalisation (MV, HNS) électrique se trouvant dans la partie amovible, avec un ensemble de conducteurs électriques (5, 5') traversant les parties du dispositif de pulvérisation pour la transmission d'une puissance électrique et/ou de signaux vers ou depuis le dispositif de commande ou de signalisation (MV, HNS) de la partie amovible (1, 2, 3), et avec un dispositif de couplage électrique (IK) pour la liaison électrique séparable des parties de l'ensemble de conducteurs (5, 5') à l'emplacement de séparation (T1, T2, T3), **caractérisé en ce que** le dispositif de couplage électrique (IK) est formé par des bobines de transmissions inductives qui sont disposées blindées dans ou sur les parties (1, 2, 3, 4) du dispositif de pulvérisation et se font face l'une l'autre sans contact à l'emplacement de séparation (T1, T2, T3), lorsque la partie amovible (1, 2, 3) du dispositif de pulvérisation est fixée sur l'autre partie.

2. Dispositif de pulvérisation selon la revendication 1, **caractérisé en ce que** les bobines de transmissions (12, 22, 24, etc.) sont insérées dans des surfaces frontales planes des parties (1, 2, 3, 4) du dispositif de pulvérisation sur lesquelles celles-ci sont jointives à l'emplacement de séparation (T1, T2, T3).

3. Dispositif de pulvérisation selon la revendication 1 ou 2, **caractérisé en ce que** les bobines de transmissions (12, 22, 24, etc.) sont noyées dans des capsules fermées (6, 6') qui de leur côté sont insérées dans les parties (1, 2, 3, 4) du dispositif de pulvérisation.

4. Dispositif de pulvérisation selon l'une des revendications précédentes, **caractérisé en ce que** dans au moins l'une des parties (2) du dispositif de pulvérisation est inséré un composant modulaire s'étendant entre deux emplacements de séparation (T2, T3), lequel contient des ensembles de bobines de transmissions (22, 23) reliées entre elles par des conducteurs électriques, dont un se trouve en un emplacement de séparation (T2) et l'autre à l'autre emplacement de séparation (T3).

5. Dispositif de pulvérisation selon l'une des revendications précédentes, **caractérisé en ce qu'**il est prévu au moins un coupleur inductif (IK) qui comporte, sur chacun de ses deux côtés séparables, deux bobines de transmissions ou plus qui sont enfermées côte à côte dans une capsule commune ou un composant modulaire (10, 20, 30, 40) inséré dans la partie (1, 2, 3, 4) du dispositif de pulvérisation.

6. Dispositif de pulvérisation selon l'une des revendications précédentes, **caractérisé en ce qu'**au moins une bobine de transmission d'au moins un coupleur inductif (IK) est enfermée avec un microprocesseur ou un dispositif électronique autre dans une capsule commune ou un composant modulaire (10, 35, 40, 45) inséré dans la partie (1, 2, 3, 4) du dispositif de pulvérisation.

7. Dispositif de pulvérisation selon la revendication 2, **caractérisé en ce que** les bobines de transmissions (12, 22, 24, etc.) sont des bobines plates qui se situent par leurs plans principaux parallèlement aux surfaces frontales des parties du dispositif de pulvérisation.

8. Dispositif de pulvérisation selon l'une des revendications précédentes, **caractérisé en ce que** les bobines de transmissions d'au moins un coupleur inductif (IK) sont des bobines plates d'un diamètre inférieur à 10 mm.

9. Dispositif de pulvérisation selon l'une des revendications précédentes, **caractérisé en ce qu'**au moins un emplacement de séparation (T3, T2) pourvu d'un dispositif de couplage inductif (IK3, IK2) se trouve entre la tête de pulvérisation (1) d'un pulvérisateur (Z) et un bloc-soupapes (3) du pulvérisateur.

10. Dispositif de pulvérisation selon l'une des revendications précédentes, **caractérisé en ce qu'**au moins un emplacement de séparation (T1), pourvu d'un dispositif de couplage inductif (IK1), se trouve entre un bloc-soupapes (3) d'un pulvérisateur (Z) et une partie de fixation (4) du pulvérisateur sur le côté du bloc-soupapes (3) tourné à l'opposé de la tête de pulvérisation (1).

11. Dispositif de pulvérisation selon l'une des revendications précédentes, **caractérisé en ce que** deux, trois emplacements de séparation (T1, T2, T3) ou plus sont prévus auxquels se trouvent des dispositifs de couplage inductifs (IK1, IK2, IK3) entre des parties voisines du dispositif de pulvérisation, les dispositifs de pulvérisation de ces emplacements de séparation étant couplés électriquement en série, ce qui fait que la puissance électrique ou des signaux sont transmis dans l'ordre par plusieurs coupleurs inductifs.

12. Dispositif de pulvérisation selon l'une des revendications précédentes avec un dispositif de contrôle (50), par exemple en forme de broche, conçu pour contrôler les fonctions électriques du dispositif de commande ou de signalisation (MV, HNS) du dispositif de pulvérisation, lequel contient dans ou sur une surface frontale un ensemble de bobines de transmissions (51, 52) qui forme, avec l'ensemble de bobines de transmissions (42, 46) de l'une des parties (4) séparée du dispositif de pulvérisation, un dispositif de couplage inductif.

13. Dispositif de pulvérisation selon la revendication 12 avec un dispositif de contrôle (50) dont la surface frontale peut être placée sur une surface frontale de la partie (4) du dispositif de pulvérisation, sur lequel ou dans lequel se trouve son ensemble de bobines de transmissions (42, 46).

14. Dispositif de pulvérisation selon la revendication 12 ou 13 avec une broche de contrôle (50) qui contient à chacune des extrémités opposées un ensemble de bobines de transmissions inductif (51, 52).

15. Dispositif de pulvérisation selon l'une des revendications 12 à 14 avec un dispositif de contrôle (50) qui contient un circuit d'exploitation (61, 64) et des lampes témoin (53, 56) pour afficher les fonctions contrôlées.

16. Dispositif de pulvérisation selon l'une des revendications précédentes, **caractérisé en ce que** le dispositif de couplage (IK) transmet de l'énergie pour l'alimentation en courant d'un dispositif de signalisation ou de contrôle (HNS, 50) dans un sens de transmission et transmet dans le sens opposé des signaux produits par le dispositif de signalisation ou de contrôle.
